# EUROPEAN PATENT SPECIFICATION

(11) **EP 4 118 505 B1**
(45) Date of publication and mention of the grant of the patent: **23.04.2025**
(21) Application number: 21701829.0
(22) Date of filing: 02.02.2021
(51) Int. Cl.: G05D 1/00

(54) **AUTONOMOUS TRANSPORTATION NETWORK AND METHOD FOR OPERATING THE SAME**
AUTONOMES TRANSPORTNETZ UND VERFAHREN ZUM BETRIEB DES TRANSPORTNETZES
RÉSEAU DE TRANSPORT AUTONOME ET PROCÉDÉ POUR FAIRE FONCTIONNER LE RÉSEAU

(30) Priority: 09.03.2020 GB 202003395; 09.03.2020 LU 101673
(43) Date of publication of application: 18.01.2023
(73) Proprietor: Dromos GmbH, 80337 München (DE)
(72) Inventor: DÜRR, Martin, 80337 Munich (DE)
(74) Representative: Sonnenberg Harrison Partnerschaft mbB
(86) International application number: PCT/EP2021/052377
(87) International publication number: WO 2021/180398

(56) References cited:
- EP-A1- 0 762 253
- US-A- 4 986 384
- US-A1- 2016 209 848
- US-B1- 10 152 053

## Description

### Cross Reference to Related Applications

This application claims priority of Luxemburg Patent Application number LU101673, filed on 09 March 2020 and UK Patent Application 2003395.7, filed on 09 March 2020.

### Summary of the Invention

The invention relates to an autonomous transportation network and method for operating the same.

### Background to the Invention

The term "automated transit network" or "automated transportation network" (abbreviated to ATN) is a relatively new designation for a specific transit mode that falls under the larger umbrella term of "automated guideway transits" (AGT). Before 2010, the name "personal rapid transit (PRT)" was used to refer to the ATN concept. In Europe, the ATN has been referred to in the past as "podcars". This document sets out the ATN concept and describes a novel method of operation of the ATN concept.

Like all forms of AGT, ATN is composed of automated vehicles that run on an infrastructure and are capable of carrying passengers from an origin to a destination. The automated vehicles are able to travel from the origin to the destination without any intermediate stops or transfers, such as are known on conventional transportation systems like buses, trams (streetcars) or trains. The ATN service is typically non-scheduled, like a taxi, and travelers are able to choose whether to travel alone in the vehicle or share the vehicle with companions.

The ATN concept is different from self-driving cars which are starting to be seen on public streets. The ATN concept has most often been conceived as a public transit mode similar to a train or bus rather than as an individually used consumer product such, as a car. Current design concepts of the ATN currently rely primarily on a central control management for controlling individually the operation of the autonomous vehicles on the ATN.

On the other hand, the self-driving cars are often described as being "autonomous", but in practice, there are different classes or levels of vehicle autonomy. The degree of vehicle autonomy is typically divided in five levels, as set out by the On-Road Automated Driving (ORAD) committee of the Society of Automotive Engineers (SAE) in "Taxonomy and definitions for terms related to driving automation systems for on-road motor vehicles" published in Recommended Practice SAE J 3016 on 15 June 2018. Level 0 refers to a vehicle that has no driving automation. The driver of the vehicle is fully in charge of operating the movement of the vehicle. Vehicles of Level 0 may include safety systems such as, for example, a collision avoidance alert. Level 1 refers to vehicles having at least one driving assistance feature such as an acceleration or braking assist system. The driver is responsible for the driving tasks but is supported by the driving assist system which is capable of affecting the movement of the vehicle. Level 2 describes vehicles having more than one assist system for actively affecting the movement of the vehicle. The driver, in Level 2, is still responsible for the driving tasks and must actively monitor the trajectory of the vehicle at all times. The driver is, however, actively supported by the assist systems. Level 3 describes a so-called "conditional automation" of the vehicle. The vehicle is capable of autonomously driving in certain situations and with limitations. The driver is not required to actively monitor the assist system but is, however, required to take control of a driving situation if requested by the assist system. Level 4 describes autonomously travelling vehicles which are capable of travelling specific routes under normal conditions without human supervision. The vehicles of Level 4 can therefore operate without a driver but might need remote human supervision in case of conflict situations, travelling in remote areas, or when travelling extreme weather conditions. Level 5 Automation describes fully autonomously driving vehicles. No human interaction is required at any time for the operation of the vehicles.

The reliance of the existing ATN networks on a central control management leads to a bottleneck in that each of the autonomous vehicles needs to be in almost continuous communication with the central control management. This can result in problems if the communications network is overloaded or there is a major incident somewhere in the ATN network that requires action from the central control management.

An example of such as central control management is outlined in US Patent No. 10,345,805 (Seally, assigned to Podway Inc.) in which the central control management receives a request from an autonomous vehicle for a route from the origin to the destination. The central control management calculates the route and sends to the autonomous vehicle a journey instruction set to allow the autonomous vehicle to navigate from the origin to the desired destination along the calculated route. The central control management in this system needs to transmit large amounts of data from the autonomous vehicles and gather data from the autonomous vehicles on a continuous basis. This requires a large amount of hardware and data bandwidth and can cause a problem if an autonomous vehicle enters an area in which connectivity is poor. In the event of a breakdown of the central control management, then the autonomous vehicles will no longer be able to navigate or recalculate journeys.

Many current ATN concepts rely on guideways being built as part of the infrastructure. This may have its advantages when dedicated infrastructure separate from other traffic flows or pedestrians can be designed. The cost of the provision of the guideways is significant and this will delay the development of the ATN network. One example of such a guideway is the infrastructure that can be seen in London Heathrow airport's Terminal 5.

A report on "Automated Transit Networks (ATN): A Review of the State of the Industry and Prospects for the Future" published by the Mineta Transportation Institute, Report No 12-31 in September 2014 reported that at the date of writing no ATN having more than ten stations had been implemented in the world. Currently the ATN networks operate on the principle of mapping each origin to all of the destinations. This leads to a matrix with 20 entries even for a simple five-station system as there are four possible destinations from each of the five origins. A ten-station system would have 90 possible routes and it will be seen that as the number of origins and destinations increases, then an O/D matrix listing all of the possible routes will expand out of hand. The current systems are therefore not scalable.

A further issue that has been identified in the ATN network is the handling of multiple vehicles and prioritizing of access for priority vehicles, such as paramedics or police. A solution is offered in US Patent 9,536,427 (Tonguz et al, assigned to Carnegie Mellon). The solution uses vehicle-to-vehicle communication to establish a priority zone as required.

US 10,152,053 B1 discloses an autonomous vehicle management system and a method for the controlling of a fleet of vehicles. The system comprises a plurality of autonomous vehicles having an onboard processor and vehicle memory for calculating of a route. The system further comprises a control management center and a plurality of beacons for communication between the control management center and the autonomous vehicles. The beacons may also be used for determining a location of the autonomous vehicle within a transportation network. The method comprises receiving a plurality of requests for rides in the autonomous vehicle by passengers, identifying demographic information related to each of the plurality of passengers, determining a vulnerability score and a priority for each of the plurality of the passengers; and causing a particular one of the autonomous vehicles to pick up the passengers. The vulnerability score is used to assess the vulnerability of the passenger in assigning and to calculate a priority to pick up each passenger. For example, passengers in higher crime areas and/or having demographics matching a vulnerable subset (e.g. senior citizens) of the population may be deemed to be more vulnerable and may be assigned higher vulnerability scores. The U.S. patent further discloses sending and receiving of traffic information by the autonomous vehicles using the beacons. An independent calculation of the routes in the control management center and the onboard processor is not, however, disclosed.

US 2009/037086 A1 describes a method for equalizing traffic flows for autonomous vehicles in a transportation network using a control computer. The control computer stores information on the routes in the network as vectorized graphs representing the routes extending from an origin to a destination. The route network contains multiple branch points creating separate branches of the routes for the travelling of the autonomous vehicles. At least some of the autonomous vehicles send a unique vehicle identifier and their current position to the traffic control computer. The information sent by the autonomous vehicle includes the destination(s) to which the autonomous vehicles are travelling. The document also discloses a method for producing and transmitting a route recommendation to the vehicles. The route recommendation comprises sending a distribution ratio V to the vehicles. The autonomous vehicles themselves then calculate the alternate routes from the origin to the destination using a randomized selection scheme using the distribution ratio V. The document also teaches a method for transmitting the individual route recommendations to the vehicles. This method comprises briefly connecting a communication system, mounted close to the road via wireless communication to the autonomous vehicle. Different route recommendations are alternately sent to the passing autonomous vehicles. The U.S. patent application remains silent on the issue of an independent route calculation by the control management center and an onboard processor of the autonomous vehicles.

EP 0 762 253 A1 describes an automatic steering system for controlling a steering angle so that a vehicle traces a reference line provided along a road. The steering system comprises an administration center and a plurality of vehicles comprising an automatic steering apparatus. The administration center and the plurality of vehicles are connected wirelessly through beacons. The administration center is capable of sending a guiding signal to the vehicle to avoid a construction area or accident area. The European patent application does not describe a plurality of autonomous vehicles with an onboard processor and vehicle memory for calculating a route between an origin and a destination and a vehicle antenna for transmitting the calculated route. The European patent application does furthermore not describe that the control management processor of the control management center and the onboard processor of the autonomous vehicle independently calculate the route from an origin and a destination.

US 4,986,384 A describes a remote-control system for mobile objects. The mobile objects are capable of recognizing their own geographical position. The mobile objects are remote controlled by a main driving controller which is capable of receiving obstacle information from an obstacle detector and remote controlling the mobile objects to avoid a collision. The US patent application does not describe a plurality of autonomous vehicles with an onboard processor and vehicle memory for calculating a route between an origin and a destination and a vehicle antenna for transmitting the calculated route. The US patent application does furthermore not describe that the control management processor of the control management center and the onboard processor of the autonomous vehicle independently calculate the route from an origin and a destination.

US 2016/209,848 A1 discloses a system and method for associating passenger docking locations with destinations. The document describes general information relating to autonomous vehicles but does not describe a plurality of autonomous vehicles with an onboard processor and vehicle memory for calculating a route between an origin and a destination and a vehicle antenna for transmitting the calculated route.

There is therefore a need for providing a resilient autonomous transportation network.

### Summary of the Invention

An autonomous transportation network is disclosed. The autonomous transportation network is aware of the movement of all autonomous vehicles travelling within the autonomous transportation network without the autonomous vehicles having to constantly communicate the position in the network to a control management center.

The autonomous transportation network comprises a plurality of autonomous vehicles with an onboard processor and vehicle memory for calculating a route between an origin and a destination and a vehicle antenna for transmitting the calculated route. A control management center for control of the transportation network comprises a control management processor and a central memory. A passenger can request to travel the route from an origin to a destination in the transportation network. The control management processor independently calculates the routes of the plurality of autonomous vehicles from the origin to the destination. A plurality of beacons is connected to the control management center and receives redirection information from the control management center for transmission to one or more of the plurality of autonomous vehicles in the event of a disturbance. The control management center is adapted for simulating a traffic demand and the routes of the autonomous vehicles, for comparing the routes calculated for the plurality of autonomous vehicles with the route independently calculated in the control management center, for determining corrected route instructions for the autonomous vehicles in case of a necessary redirection along the route, and for sending corrected route instructions to the one of the plurality of autonomous vehicles in the event of a disturbance.

This network enables the plurality of autonomous vehicles to travel along the route from the origin to the destination independently. The control management center is aware of the movement of the plurality of autonomous vehicles travelling in the autonomous transportation network without the autonomous vehicles having to constantly communicate with the control management center. This independent calculation of the routes hereby reduces the communication overhead of a communication infrastructure.

The control management center is adapted to determine a conflict situation on the routes of the plurality of autonomous vehicles.

A method of operation of an autonomous transportation network comprising a plurality of autonomous vehicles is also disclosed. The method comprises receiving an instruction for a journey from an origin to a destination, calculating in at least one of plurality of autonomous vehicles a route from the origin to the destination, independently calculating in a control management center the route of the autonomous vehicle from the origin to the destination, comparing the route calculated in the one of the plurality of autonomous vehicles with the route independently calculated in the control management center, wherein the comparing further comprises simulating a traffic demand and the routes of the autonomous vehicles and determining corrected route instructions for the autonomous vehicles in case of a necessary redirection along the route, and, in the event of a disturbance, sending corrected route instructions to the one of the plurality of autonomous vehicles. The sending of the corrected route instruction comprises sending the corrected route instructions to one of more beacons. The corrected route instructions can be one or more of speed instructions or diversion instructions.

### Description of the Figures

Fig. 1 shows an overview of the ATN of this document.
Fig. 2 shows a workflow.
Fig. 3A shows correction to route based on blocked route
Fig. 3B shows management at a roundabout (traffic circle).
Fig. 4 shows a workflow for calculation of a route in an autonomous vehicle.
Fig. 5 shows a workflow for calculation of a route in a control management center.

### Detailed Description of the Invention

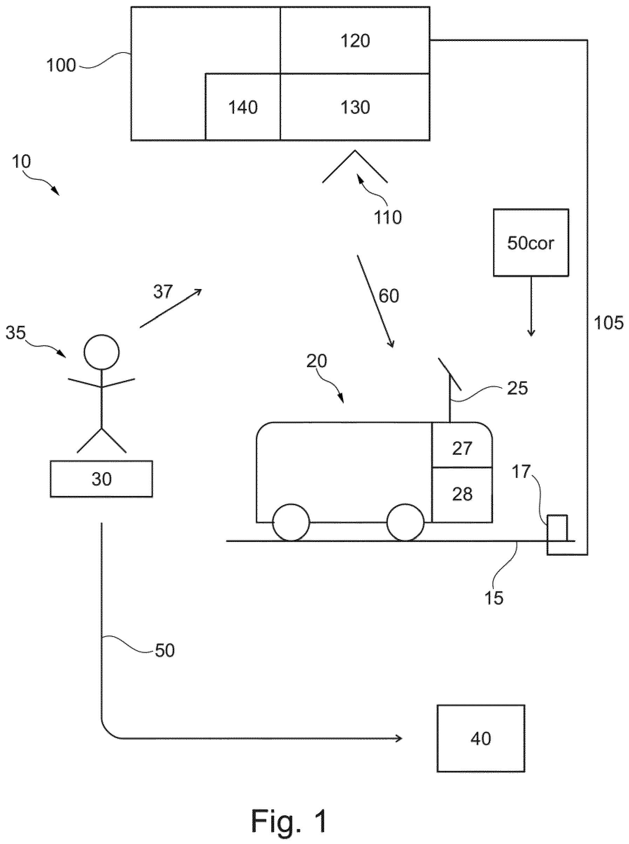

Fig. 1 shows a first example of an autonomous transportation network 10 according to one aspect of this document. The autonomous transportation network has a plurality of autonomous vehicles 20 running on a plurality of tracks 15. The tracks 15 form a network of tracks over which the autonomous vehicles 20 are able run. It will be appreciated that the tracks 15 may include guide rails, such as steel rails or concrete guidance elements, but could also comprise separated roadways. It is envisaged that the tracks 15 could also be incorporated into regular roadways and streets as long as sufficient safety measures are incorporated. The tracks 15 are provided with a plurality of beacons 17 (similar to rail balises) which monitor the progress of the autonomous vehicles 20 and can also send signals to the autonomous vehicles 20.

The autonomous vehicles 20 can be parked in a parking place with a plurality of tracks 15 or be in motion along the tracks 15. The autonomous vehicles 20 will be typically battery powered and can be charged, for example, when they are in the parking places.

The autonomous transportation network 10 has a control management center 100 which monitors the progress of the autonomous vehicles 20 but does not directly control the progress of the autonomous vehicles 20, as will be explained below. The autonomous vehicles 20 can send and receive information to the control management center 100, if necessary, and are connected to the control management center 100 through wireless connections using a vehicle antenna 25 located on the autonomous vehicle 20 in communication with the control management center 100 through the communications antenna 110 at the control management center 100. The control management center 100 is provided with a processor 120 and a central memory 140. The control management center 100 is connected to the beacons 17 using fixed communication lines 105 (although of course it would be possible to also use wireless connections over the distance between the beacons 17 and the control management center 100 or over part of the distance if required). The central memory 140 includes central geographic data 124 about the autonomous transportation network 10 including the location of the beacons 17.

The autonomous transportation network 10 is provided with a plurality of stopping points (also termed stations), as is known from a railway, tram, or bus network. The stopping points will be clearly labelled to passengers 35 who wish to use the autonomous transportation network 10. A vehicle memory 28 in the autonomous vehicle 20 stores a vehicle geographic data 24 in the form of a network map with the location of the plurality of stopping points and also a selection of precalculated routes along the tracks 15 between any two of the stopping points. There will generally be more than one pre-calculated route between two of the stopping points to allow for alternative paths to be followed, as will be explained later.

The autonomous vehicle 20 has not only the afore-mentioned vehicle antenna 28 and the vehicle memory 28 but will also include an onboard processor 27 which can control the autonomous vehicle 20 using the information in the vehicle memory 28 and any information received from the beacons 17.

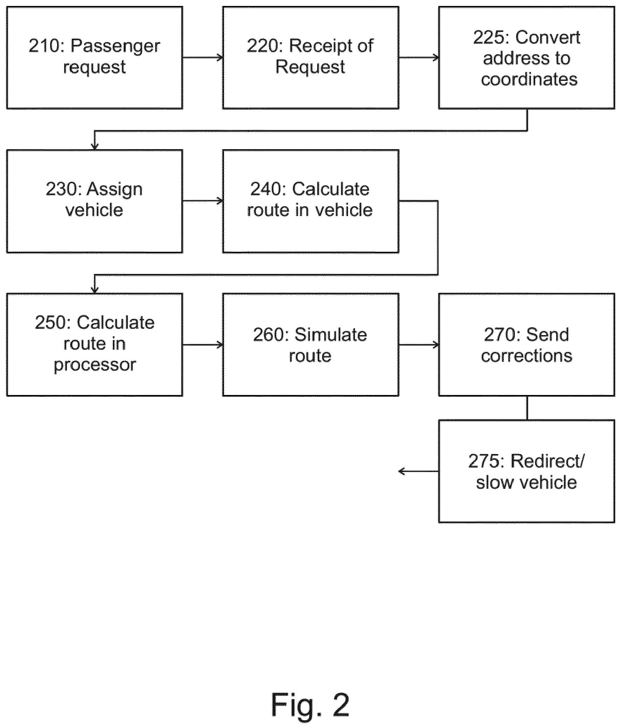

Suppose now that a passenger 35 at a first one of the stopping points, termed an origin 30, wishes to travel to a second one of the stopping points, termed a destination 40. Fig. 2 shows the flow of this method. **In** a first step 210 the passenger 35 will make a request 37 for an autonomous vehicle 20 and will give the destination 40. This request 37 is made for example by telephone or using an app on a smartphone. It would also be possible to use a control and information point at the origin 30 if this is provided or indeed to phone a telephone help line to arrange for a pick-up at the origin 30 by one of the autonomous vehicles 20.

The request 37 is received in step 220 by the control management center 100. The request 37 will include details about the origin 30 of the passenger and the planned destination 40 of the passenger. The origin 30 can be determined by either using GPS coordinates transmitted in the request 37 from a smartphone or by transmitting the number of the stopping point in the app. The destination 40 of the passenger 35 will be determined in step 225 by either inputting the number of the stopping point corresponding to the destination 40, or an address of the destination 40 or selecting a point representing the nearest stopping point to an address on a map displayed on the screen of the smartphone.

The control management center 100 stores the data received through the request 37 concerning the origin 30, at which point the passenger 35 wishes to be picked up, and the destination 40. The control management center 100 will then generally assign in step 230 the autonomous vehicle 20 closest to the passenger 35 to pick up the passenger 35 from the origin 30. It will be appreciated, of course, that there may already be one of the autonomous vehicles 20 at the origin 30 and the passenger 35 may in fact be standing next to one of the autonomous vehicles 20 and other ways of communication, such as NFC communication or by scanning a bar code or QR code on the vehicle could be used to reserve the autonomous vehicle 20 for use by the passenger 35. These examples are not limiting of the invention.

The autonomous vehicle 20 will then calculate in step 240 locally in a local processor 27 using the vehicle geographic data 24 (network map plus precalculated routes between the stopping points) stored in the vehicle memory 28 the route 50 to the destination 40 to which the passenger 35 wishes to go.

At around the same time in step 250 the control management system 10 will independently calculate using the control management processor 120 the route to the destination 40. The vehicle geographic data 24 stored in the autonomous vehicle 20 is identical or substantially similar to the central geographic data 124 stored in the central memory 140 and thus the control management system 10 will know the route that the autonomous vehicle 20 will take between the origin 30 and the destination 40. In other words, the central geographic data 124 stored in the central memory 140 comprises identical or similar data compared to the central geographic data 124 stored in the autonomous vehicle 20. The central geographic data 124 might comprise, however, more detailed data as, for example, the simulated current traffic situation in the transportation network 10. Hence, the route calculation in the autonomous vehicle 20 and the route calculation in the control management system 10 will be performed separately from each other in real-time based on the vehicle geographic data 24 and the central geographic data 124 and will initially not take into account any disturbances, such as but not limited to traffic accidents, traffic jams.

Once the route 50 has been calculated in the local processor 27, the autonomous vehicle 20 will start its journey from the origin 30 to the destination 40. Unlike in prior art systems, the autonomous vehicle 20 is not required to notify the calculated route 50 to the control management center 100. The control management center 100 knows, as described above, the route of the autonomous vehicle 20 by calculating the route 50 in step 250.

The purpose of this dual calculation of the routes is to enable the control management center 100 to determine what is happening in real-time in the autonomous transportation network 10. There will not be a single passenger 35 requesting a single one of the autonomous vehicles 20, but a number of passengers 35 requesting a number of autonomous vehicles 20 from a plurality of the origins 30 and going to a plurality of the destinations 40. It is the role of the control management center 100 in step 260 to simulate the traffic demand and the routing of the autonomous vehicles 20 and, if necessary, make changes of the routes 50 or adjust the speed of travel of the autonomous vehicle 20 as will be described in more detail in the examples set out below.

In the event that the control management center 100 determines that the autonomous vehicle 20 needs to deviate or needs to be redirected from the calculated route 40, then the control management center 100 sends corrected route instructions 50cor. The control management center 100 does not send these corrected route instructions 50cor directly to the autonomous vehicle 20, but in step 270 corrected routing information is sent to one or more of the beacons 17 which can then redirect or slow the autonomous vehicle 20 in step 275.

The communication between the beacons 17 and the autonomous vehicles 20 is carried out locally and does not require much power. Only those beacons 17 near the position of the autonomous vehicle 20 need to be provided with corrected routing instructions 50cor to be received by individual ones of the autonomous vehicles 20. Unlike in prior art systems, only individual ones of the autonomous vehicles 20 need to change the route 40 if a possible conflict is detected. The control management center 100 knows, from independently calculating in step S250, the location of the autonomous vehicle 20 in the autonomous transportation network 10. The control management center 100 therefore only needs to inform those beacons 17 near the position of the autonomous vehicle 20 of the corrected routing instructions 50cor. The local transmission of information between the beacon 17 and the autonomous vehicle 20 also reduces the risks of hacking of the autonomous transportation network 10 as the amount of data transmitted is very small and the distances of wireless transmission are also short.

These corrected route instructions 50cor will ensure that the autonomous vehicle 20 changes the route 50 or to alter its speed, as will be explained below. The autonomous vehicle 20 after redirection will recalculate (as in step 240) the new best route 50new to the destination 40 using the vehicle geographic data 24 and continue the journey along the corrected new best route 50new to reach the destination 40. The control management center 100 will also be able to determine the new best route 50new and will then be able to simulate the route (step 260) to determine whether there are further issues that may need a further redirection of the autonomous vehicle 20.

### Example 1: Blocked Road

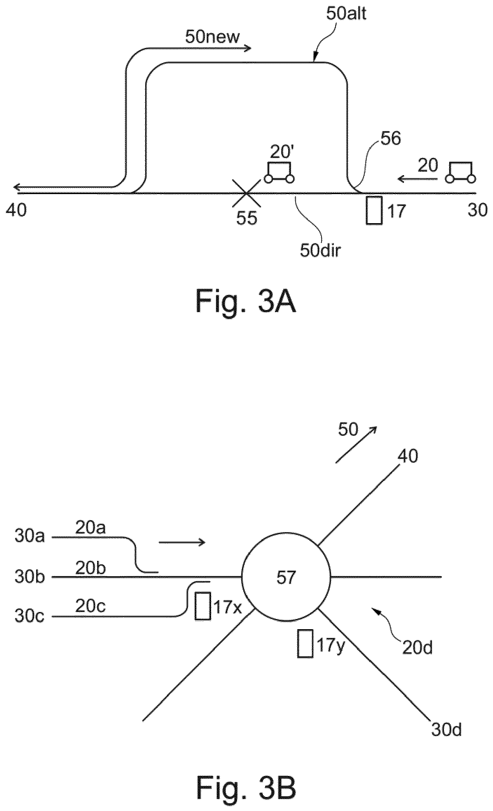

An example of a necessary correction to the originally calculated route 50 is shown in Fig. 3A in which the direct route 50dir is blocked at a blocked position 55 by, for example, a broken-down autonomous vehicle 20'. The autonomous vehicle 20 starts at the origin 30 and calculates in step 240 the direct route 50dir in step 240. The same calculated direct route 50dir is calculated in step 250 by the control management center 100. The control management center 100 has, however, received information that the calculated direct route 50dir is not possible since the direct route 50dir is blocked by the broken-down autonomous vehicle 20'. The control management center 100 sends to the beacon 17 located at a junction 56 information to redirect the autonomous vehicle 20 along an alternative route 50alt (step 270). The autonomous vehicle 20 receives from the beacon 17 the alternative routing instruction 50cor to use the alternative route 50alt. After being redirected (step 275) onto the alternative route 50alt, the autonomous vehicle 20 needs to calculate the new route 50new using the vehicle geographic data 24.

There is no need for the control management center 100 to broadcast to all of the autonomous vehicles 20 in the autonomous transportation network 100 information about the blocked route at the position 55. Only those autonomous vehicles 20 that have calculated the direct route 50dir which passes through the blocked position 55 will receive the redirection information locally from the beacon 17. This eliminates much of the potential data traffic sent from the control management center 100.

The vehicle memory 28 in the autonomous vehicle 20 does not need to store unnecessary information about the blocked routes. This simplifies the calculation of the new route 50new in the onboard processor 27 which results in a quicker calculation with the use of fewer resources. The vehicle memory 28 can be kept smaller.

The amount of resources used the control management center is also reduced since the control management processor 120 only needs to inform the beacons 17 at the start junction 56 of the blocked route that there is an obstruction due to a broken-down autonomous vehicle 20'. There is no need to broadcast the information to all of the autonomous vehicles 20.

### Example 2

A further example of the efficient management of the autonomous vehicles 20 is shown in Fig. 3B which shows three autonomous vehicles 20a-c sharing a common entrance to a roundabout 57 (also termed "traffic circle" or "rotaries") and a further vehicle 20d wishing to enter the roundabout 57. The calculated route 50 programmed in all of the autonomous vehicles 20a-d to the destination 40 from different origins 30a-d means that all of the autonomous vehicles 20a-d arrive at the roundabout 57 at approximately the same time. The routes 50 from each of the autonomous vehicles 20a-d have been calculated by the control management center 100 in step 250 and the calculations made in the control management processor 120 identify the possible conflict between the merging ones of the autonomous vehicles 20a-c and at the roundabout 57 with the autonomous vehicle 20d.

The control management center 100 is able to send information to the autonomous vehicles in step 270 to the autonomous vehicles 20a-d using the beacons 17x and 17y located near the entries to the roundabout 57. The information will not be needed to travel along another route 50alt, as shown in Fig. 3A, but will comprise instructions to reduce speed or increase speed to each of the four autonomous vehicles 20a-d to adjust their speed so that there is no conflict at the merging roads and also no conflict on the roundabout 57. This enable efficient use of available road space by the autonomous vehicles 20a-d and can mean that there is no need to initiate a braking and stopping process, which is wasteful of energy.

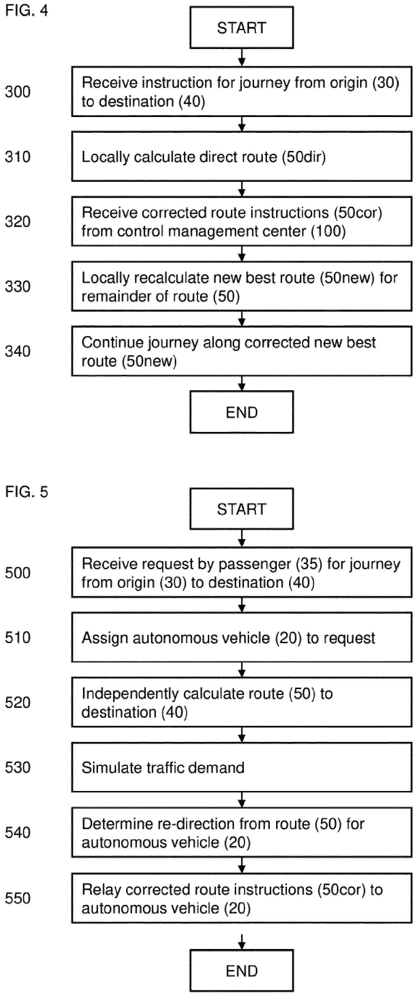

Fig. 4 shows a workflow describing the method 110b for calculation of the route 50 from the origin 30 to the destination 40 in the onboard processor 27 of the autonomous vehicle 20. In step 300, the autonomous vehicle 20 receives the instruction for the journey from the origin 30 to the destination 40. The onboard processor 27, in step 310, locally calculates a direct route 50dir from the origin 30 to the destination 40 for fulfilling the instruction. Locally calculating the direct route 50dir is done using the vehicle geographic data 24 stored in the vehicle memory 28. In step 320, the autonomous vehicle 20 receives corrected route instructions 50cor from the control management center 100 if the control management center 100 has determined corrected route instructions 50cor for the one of the plurality of autonomous vehicles 20. Receiving the corrected route instruction 50cor is done using, for example, the vehicle antenna 25. The corrected route instruction 50cor is addressed, by the control management center 100, to at one of the plurality of the autonomous vehicles 20. The corrected route instructions 50cor comprise, for example, instructions for changing the route 50 to the alternative route 50alt or altering the vehicle speed of the autonomous vehicle 20. The corrected route instructions 50cor are used to indicate the blocked position 55 along the route 50 to at least one of the plurality of autonomous vehicle 20. The corrected route instructions 50cor are also used to reduce speed or increase speed of at least one autonomous vehicle 20 so that there is no conflict when merging roads before or at a roundabout 57.

The autonomous vehicle. 20 recalculates, in step 330, the new best route 50new for the remainder of the route 50 of the autonomous vehicle 20 travelling to the destination 40. The autonomous vehicles 20 include assist systems of Level 2 or Level 3, as described above. The autonomous vehicle 20 is capable of autonomously travelling in the transportation network, using the vehicle geographic data 24 and the onboard processor 27. The autonomous vehicles 20, therefore, do not require a driver for driving of the autonomous vehicle 20. The recalculating of the new best route 50new is done by the onboard processor 27 using the vehicle geographic data 24 stored in the vehicle memory 28 and the received corrected route instructions 50cor. The autonomous vehicle 20, in step 340, continues the journey along the corrected new best route 50new to the destination 40.

Fig. 5. shows a workflow describing the method 110c for the independent calculation of the route 50 from the origin 30 to the destination 40 in the control management processor 120. In step 500, the control management center 100 receives the request for the journey of the passenger 35 from the origin 30 to the destination 40. In step 510, the control management center 100 assigns one of the plurality of autonomous vehicles 20 for fulfilling the request of the passenger 35. Assigning the request of the passenger to one of the plurality of the autonomous vehicles 20 is based on, for example, the proximity of the autonomous vehicle 20 to the passenger 35.

The control management processor 120 of the control management center 100 independently calculates, in step 520, the route 50 of the assigned one of the plurality of the autonomous vehicles 20 from the origin 30 to the destination 40. Calculating the route 50 by the control management processor 120 is done using the central geographic data 124 stored in the central memory 140. In step 530, the control management center 100 simulates a traffic demand and the routing of the autonomous vehicles 20 in the transportation network 10, using the requests received from the plurality of passengers 35 and the control management processor 120. The control management center 100 determines, in step 540, the corrected route instructions 50cor to enable the redirection of the assigned one of the plurality of autonomous vehicles 20 from the route 50. Determining the corrected route instructions 50cor is done using the simulated traffic demand.

The corrected route instructions 50cor are, in step 550, relayed to the assigned one of the autonomous vehicles 20 for redirecting the autonomous vehicle 20 to the alternative route 50alt or for recalculating a new best route 50new by the autonomous vehicle 20, as elaborated in the description of Fig. 4 (see above.)

### Reference Numerals

- 10: Autonomous transportation network
- 15: Tracks
- 17: Beacons
- 20: Autonomous vehicles
- 24: Geographic data
- 25: Vehicle antenna
- 27: Onboard Processor
- 28: Vehicle memory
- 30: Origin
- 35: Passenger
- 37: Request
- 40: Destination
- 50: Route
- 50cor: Corrected route
- 50alt: Alternative route
- 50dir: Direct route
- 50new: New best route
- 55: Blocked position
- 56: Junction
- 57: Roundabout
- 100: Control management center
- 105: Fixed lines
- 110: Communication antenna
- 120: Control management processor
- 124: Central geographic data
- 130: Transmitter
- 140: Central memory

## Claims

1. An autonomous transportation network (10) comprising
a plurality of autonomous vehicles (20) with an onboard processor (27) and vehicle memory (28) for calculating (240) a route (50) between an origin (30) and a destination (40) and a vehicle antenna (25) for transmitting the calculated route (50);
a control management center (100) comprising a control management processor (120) and a central memory (140) for independently calculating the routes (50) of the plurality of autonomous vehicles (20); and
a plurality of beacons (17) connected to the control management center (100) and receiving redirection information from the control management center (100) for transmission to one or more of the plurality of autonomous vehicles (20) in the event of a disturbance,
wherein the control management center (100) is further adapted for simulating a traffic demand and the routes (50) of the autonomous vehicles (20), for comparing the routes (50) calculated for the plurality of autonomous vehicles (20) with the route independently calculated in the control management center (100), for determining corrected route instructions (50cor) for the autonomous vehicles (20) in case of a necessary redirection along the route (50), and for sending corrected route instructions (50cor) to the one of the plurality of autonomous vehicles (20) in the event of a disturbance.

2. The autonomous transportation network (10) of claim 1, wherein the plurality of beacons (17) are located at junctions (56).

3. The autonomous transportation network (10) of claim 1 or 2, wherein the control management center (100) is adapted to determine conflict situation in the routes (50) of the plurality of autonomous vehicles (20).

4. A method of operation (100a) of an autonomous transportation network comprising a plurality of autonomous vehicles (20), the method comprising:
- receiving an instruction for a journey from an origin (30) to a destination (40);
- locally calculating (240) in at least one of plurality of autonomous vehicles (20) a route (50) from the origin (30) to the destination (40);
- independently calculating (250) in a control management center (100) the route (50) of the autonomous vehicle (20) from the origin (30) to the destination (40);
- comparing (260) the route (50) calculated in the one of the plurality of autonomous vehicles (20) with the route independently calculated in the control management center (100), wherein the comparing further comprises simulating (260) a traffic demand and the routes (50) of the autonomous vehicles (20) and determining corrected route instructions (50cor) for the autonomous vehicles (20) in case of a necessary redirection along the route (50); and, in the event of a disturbance,
- sending (270) corrected route instructions (50cor) to the one of the plurality of autonomous vehicles (20).

5. The method of claim 4, wherein the sending (270) of the corrected route instruction (50cor) comprises sending the corrected route instructions (50cor) to one of more beacons (17).

6. The method of claim 4 or 5, wherein the corrected route instructions (50cor) comprises one or more of speed instructions or diversion instructions.

## Patentansprüche

1. Autonomes Transportnetzwerk (10), umfassend
eine Vielzahl von autonomen Fahrzeugen (20) mit einem Bordprozessor (27) und einem Fahrzeugspeicher (28) zum Berechnen (240) einer Route (50) zwischen einem Ausgangspunkt (30) und einem Zielpunkt (40) und einer Fahrzeugantenne (25) zum Übertragen der berechneten Route (50);
eine Steuerverwaltungszentrale (100), die einen Steuerverwaltungsprozessor (120) und einen Zentralspeicher (140) zum unabhängigen Berechnen der Routen (50) der Vielzahl von autonomen Fahrzeugen (20) umfasst; und
eine Vielzahl von Ortungsgeräten (17), die mit der Steuerverwaltungszentrale (100) verbunden sind und Umleitungsinformationen von der Steuerverwaltungszentrale (100) zur Übertragung an eines oder mehrere der Vielzahl von autonomen Fahrzeugen (20) im Fall einer Störung empfangen,
wobei die Steuerverwaltungszentrale (100) ferner dafür ausgelegt ist, Verkehrsnachfragen und die Routen (50) der autonomen Fahrzeuge (20) zu simulieren, um die für die Vielzahl von autonomen Fahrzeugen (20) berechneten Routen (50) mit der in der Steuerverwaltungszentrale (100) unabhängig berechneten Route zu vergleichen, korrigierte Routenanweisungen (50cor) für die autonomen Fahrzeuge (20) im Fall einer notwendigen Umleitung entlang der Route (50) zu bestimmen und korrigierte Routenanweisungen (50cor) an das eine der Vielzahl von autonomen Fahrzeugen (20) im Fall einer Störung zu senden.

2. Autonomes Transportnetzwerk (10) nach Anspruch 1, wobei sich die Vielzahl von Ortungsgeräten (17) an Knotenpunkten (56) befinden.

3. Autonomes Transportnetzwerk (10) nach Anspruch 1 oder 2, wobei die Steuerverwaltungszentrale (100) dafür ausgelegt ist, eine Konfliktsituation in den Routen (50) der Vielzahl von autonomen Fahrzeugen (20) zu bestimmen.

4. Verfahren (100a) zum Betrieb eines autonomen Transportnetzwerks, das eine Vielzahl von autonomen Fahrzeugen (20) umfasst, wobei das Verfahren umfasst:
- Empfangen einer Anweisung für eine Fahrt von einem Ausgangspunkt (30) zu einem Zielpunkt (40);
- lokales Berechnen (240) einer Route (50) von dem Ausgangspunkt (30) zu dem Zielpunkt (40) in mindestens einem der Vielzahl von autonomen Fahrzeuge (20);
- unabhängiges Berechnen (250) der Route (50) des autonomen Fahrzeugs (20) von dem Ausgangspunkt (30) zu dem Zielpunkt (40) in einer Steuerverwaltungszentrale (100);
- Vergleichen (260) der in dem einen der Vielzahl von autonomen Fahrzeugen (20) berechneten Route (50) mit der in der Steuerverwaltungszentrale (100) unabhängig berechneten Route, wobei das Vergleichen ferner das Simulieren (260) einer Verkehrsnachfrage und der Routen (50) der autonomen Fahrzeuge (20) und das Bestimmen korrigierter Routenanweisungen (50cor) für die autonomen Fahrzeuge (20) im Fall einer notwendigen Umleitung entlang der Route (50) umfasst; und, im Fall einer Störung,
- Senden (270) korrigierter Routenanweisungen (50cor) an das eine der Vielzahl von autonomen Fahrzeugen (20).

5. Verfahren nach Anspruch 4, wobei das Senden (270) der korrigierten Routenanweisungen (50cor) das Senden der korrigierten Routenanweisungen (50cor) an eine oder mehrere Ortungsgeräte (17) umfasst.

6. Verfahren nach Anspruch 4 oder 5, wobei die korrigierten Routenanweisungen (50cor) eine oder mehrere Geschwindigkeitsanweisungen oder Umleitungsanweisungen umfassen.

## Revendications

1. Réseau de transport autonome (10) comprenant
une pluralité de véhicules autonomes (20) avec un processeur embarqué (27) et une mémoire de véhicule (28) pour calculer (240) un itinéraire (50) entre une origine (30) et une destination (40) et une antenne de véhicule (25) pour transmettre l'itinéraire calculé (50) ;
un centre de gestion de commande (100) comprenant un processeur de gestion de commande (120) et une mémoire centrale (140) pour calculer indépendamment les itinéraires (50) de la pluralité de véhicules autonomes (20) ; et
une pluralité de balises (17) connectées au centre de gestion de commande (100) et recevant des informations de redirection du centre de gestion de commande (100) pour transmission à un ou plusieurs de la pluralité de véhicules autonomes (20) en cas de perturbation,
dans lequel le centre de gestion de commande (100) est en outre adapté pour simuler une demande de trafic et les itinéraires (50) des véhicules autonomes (20), pour comparer les itinéraires (50) calculés pour la pluralité de véhicules autonomes (20) avec l'itinéraire calculé indépendamment dans le centre de gestion de commande (100), pour déterminer des instructions d'itinéraire corrigées (50cor) pour les véhicules autonomes (20) en cas de redirection nécessaire le long de l'itinéraire (50), et pour envoyer des instructions d'itinéraire corrigées (50cor) à l'un de la pluralité de véhicules autonomes (20) en cas de perturbation.

2. Réseau de transport autonome (10) selon la revendication 1, dans lequel la pluralité de balises (17) sont situées à des jonctions (56).

3. Réseau de transport autonome (10) selon la revendication 1 ou 2, dans lequel le centre de gestion de commande (100) est adapté pour déterminer une situation de conflit dans les itinéraires (50) de la pluralité de véhicules autonomes (20).

4. Procédé de fonctionnement (100a) d'un réseau de transport autonome comprenant une pluralité de véhicules autonomes (20), le procédé comprenant :
- la réception d'une instruction pour un voyage d'une origine (30) à une destination (40) ;
- le calcul local (240) dans au moins un de la pluralité de véhicules autonomes (20) d'un itinéraire (50) de l'origine (30) à la destination (40) ;
- le calcul indépendant (250) dans un centre de gestion de commande (100) de l'itinéraire (50) du véhicule autonome (20) de l'origine (30) à la destination (40) ;
- la comparaison (260) de l'itinéraire (50) calculé dans l'un de la pluralité de véhicules autonomes (20) avec l'itinéraire calculé indépendamment dans le centre de gestion de commande (100), dans lequel la comparaison comprend en outre la simulation (260) d'une demande de trafic et des itinéraires (50) des véhicules autonomes (20) et la détermination d'instructions d'itinéraire corrigées (50cor) pour les véhicules autonomes (20) en cas de redirection nécessaire le long de l'itinéraire (50) ; et, en cas de perturbation,
- l'envoi (270) d'instructions d'itinéraire corrigées (50cor) à l'un de la pluralité de véhicules autonomes (20).

5. Procédé selon la revendication 4, dans lequel l'envoi (270) de l'instruction d'itinéraire corrigée (50cor) comprend l'envoi des instructions d'itinéraire corrigées (50cor) à une ou plusieurs balises (17).

6. Procédé selon la revendication 4 ou 5, dans lequel les instructions d'itinéraire corrigées (50cor) comprennent une ou plusieurs parmi des instructions de vitesse ou des instructions de déviation.
